# EUROPÄISCHE PATENTSCHRIFT

(11) **EP 2 644 042 B1**
(45) Veröffentlichungstag und Bekanntmachung des Hinweises auf die Patenterteilung: **20.08.2014**
(21) Anmeldenummer: 13001529.0
(22) Anmeldetag: 25.03.2013
(51) Int. Cl.: A23L 1/325

(54) **Gefrorenes Fischprodukt und Verfahren zu seiner Herstellung**
Frozen fish product and method for producing the same
Produit à base de poisson congelé et son procédé de fabrication

(30) Priorität: 27.03.2012 DE 102012006029
(43) Veröffentlichungstag der Anmeldung: 02.10.2013
(73) Patentinhaber: FEMEG Produktions- und Vertriebs GmbH, 19217 Rehna (DE)
(72) Erfinder: Fülbier, Christian, 23867 Sülfeld (DE)
(74) Vertreter: Jakelski & Althoff

(56) Entgegenhaltungen:
- DE-T2- 3 879 203
- DE-T2- 60 026 485
- DE-T2- 69 502 688
- GB-A- 1 240 497
- US-A- 3 718 481

## Beschreibung

Die vorliegende Erfindung betrifft ein gefrorenes Fischprodukt, insbesondere von einer Scholle. Weiterhin betrifft die Erfindung ein Verfahren zur Herstellung des erfindungsgemäßen Fischproduktes.

### Stand der Technik

Um ein besonders vorteilhaftes Geschmackserlebnis zu erreichen, werden Schollen vor ihrer Zubereitung häufig mit einer Soße belegt und anschließend paniert und/oder mehliert. Angesichts der hohen Nachfrage der Verbraucher nach Tiefkühlprodukten besteht ein Bedarf, derart vorbehandelte Scholienfilets tiefgekühlt in bratfertiger Form bereitzustellen.

Es ist bekannt, z.B. Alaska-Seelachsfiletstücke mit Soße zu belegen, zu panieren und anschließend tiefzukühlen, um sogenannte Knusperfilets zu erhalten. Diese Filetstücke werden in der Regel aus tiefgefrorenen Fischblöcken gesägt. Es handelt sich hierbei um Produkte, welche keinen höchsten Qualitätsanforderungen genügen.

Weiterhin sind tiefgefrorene gefüllte Schollen bekannt, in denen eine Soße zwischen zwei Einzelfilets eingeschlossen wird und diese anschließend paniert und/oder mehliert und vorgebacken werden. Solche gefüllten Schollen sind stark gewölbt und deshalb für eine Zubereitung in der Bratpfanne ungeeignet. Sie können nur in einem Backofen oder einer Friteuse zubereitet werden.

Aus der DE 203 16 303 U1 ist ein tiefgekühltes Fischfertigprodukt bekannt, welches aus einer Fischplatte mit einer am Rand derselben aufgetragen halbfesten breiigen Masse und einer mittig angeordneten Sauce sowie aufgebrachtem Paniermehl besteht.

In der DE 1 954 044 wird ein Verfahren zur Herstellung von Fischprodukten beschrieben, bei dem zwischen zwei Schollenfilets eine Füllmasse eingebracht und anschließend tiefgefroren wird. Eine ähnliche Vorgehensweise wird in der US 3,718,481 beschrieben, wobei noch zusätzlich eine Mehlierung oder Panierung der Oberfläche erfolgt.

Es ist daher Aufgabe der vorliegenden Erfindung, ein qualitativ hochwertiges gefrorenes Fischprodukt bereitzustellen, welches ein Lebensmittel, wie beispielsweise eine Soße, enthält und paniert und/oder mehliert ist und das von einem Verbraucher in der Bratpfanne zubereitet werden kann.

### Offenbarung der Erfindung

Das erfindungsgemäße Verfahren zur Herstellung eines gefrorenen Fischproduktes weist das Bereitstellen eines Fischfilets und das Anordnen einer Grundfläche eines Werkzeugs auf dem Fischfilet auf, wobei das Werkzeug n Seitenflächen aufweist und n mindestens 3 beträgt. Mindestens zwei Fischfiletstücke werden auf dem Fischfilet so angeordnet, dass die Fischfiletstücke mindestens an n - 1 Seitenflächen des Werkzeugs angrenzen. Das Werkzeug wird entfernt, wobei eine Ausnehmung zurückbleibt, welche durch das Fischfilet und die Fischfiletstücke begrenzt wird. Diese Ausnehmung wird mit einem Lebensmittel befüllt. Anschließend werden das Fischfilet, die Fischfiletstücke und das Lebensmittel mit einer Panade und/oder Mehlierung paniert und/oder mehliert und das Fischfilet, die Fischfiletstücke, das Lebensmittel und die Panade bzw. Mehlierung schließlich auf eine Temperatur von weniger als 0°C gekühlt.

Um ein einfaches Durchbraten des Fischproduktes zu ermöglichen, ist es erfindungsgemäß bevorzugt, dass das Fischfilet eine geringe Dicke insbesondere von nicht mehr als 1 cm aufweist. Derart dünne Fischfiletstücke können den meisten Fischarten im Schwanzbereich entnommen werden, bei einem Zuchtlachs beispielsweise im Bereich der letzten 15 cm Körperlänge. Um das Filetstück jedem Bereich des Fischkörpers entnehmen zu können, ist es erfindungsgemäß allerdings bevorzugt, dass das Fischfilet und die Fischfiletstücke von einem Plattfisch (Pleuronectiformes) stammen. Besonders bevorzugt stammen das Fischfilet und die Fischfiletstücke von einer Scholle (Pleuronectidae).

Das Fischfilet und die Fischfiletstücke können frisch verarbeitet werden. Alternativ ist es auch möglich, gefrorenes Fischfilet und gefrorene Fischfiletstücke zu verarbeiten. Hierzu werden diese vor der Verarbeitung aufgetaut, vorzugsweise auf eine Temperatur im Bereich von 0 bis 4°C.

Unter einem Werkzeug wird erfindungsgemäß jeder Gegenstand verstanden, welcher über eine Grundfläche und n Seitenflächen verfügt. Als Seitenflächen werden hierbei solche Flächen bezeichnet, welche die Grundfläche berühren und vorzugsweise im Wesentlichen orthogonal darauf stehen. n hat vorzugsweise einen Wert von 3 oder 4, sodass das Werkzeug eine dreieckige bzw. rechteckige Grundfläche aufweist. Weiterhin ist es bevorzugt, dass das Werkzeug aus einem lebensmitteltauglichen Kunststoff besteht.

Es ist bevorzugt, dass zwei Fischfiletstücke so auf dem Fischfilet angeordnet werden, dass die Fischfiletstücke an n - 1 Seitenflächen des Werkzeugs angrenzen. Im Falle eines Werkzeugs mit dreieckiger Grundfläche können hierzu streifenförmige Fischfiletstücke verwendet werden. Sollen diese an mehr als zwei Seitenflächen des Werkzeugs angrenzen, so können sie hierzu beispielsweise in eine geeignete Form getrimmt werden. Die Fischfiletstücke können erfindungsgemäß unterschiedliche Abmessungen haben. So ist es im Fall eines Werkzeugs mit dreieckiger Grundfläche beispielsweise möglich, zwei längere Fischfiletstücke im Wesentlichen entlang der Längsachse des Fischfilets anzuordnen, sodass diese an zwei Seitenflächen des Werkzeugs angrenzen, und einen dritten kürzeren Fischfiletstreifen im Wesentlichen quer zur Längsachse des Fischfilets anzuordnen, sodass dieser an die dritte Seitenfläche des Werkzeugs angrenzt. Auf diese Weise wird eine an allen Seitenflächen geschlossene Ausnehmung erzeugt, welche auch zur Aufnahme von niedrigviskosen Lebensmitteln geeignet ist, die so an einem Herauslaufen aus der Ausnehmung gehindert werden.

Vor Entfernen des Werkzeugs werden die Fischfilets, das Werkzeug und die Fischfiletstücke vorzugsweise auf eine Temperatur von weniger als 0°C gekühlt. Hierdurch kommt es zu einem Aneinanderfrieren des Fischfilets und der Fischfiletstücke, sodass beim Entfernen des Werkzeugs eine Verschiebung der Fischfiletstücke vermieden wird.

Bei dem Lebensmittel kann es sich beispielsweise um eine Soße, um Gemüse, Fleischstücke oder Meeresfrüchte handeln. Unter dem Lebensmittel wird erfindungsgemäß auch eine Kombination unterschiedlicher verzehrbarer Komponenten verstanden, beispielsweise von Schinken und Käse, zur Herstellung eines Cordon Bleu Fischproduktes. Es ist allerdings erfindungsgemäß bevorzugt, dass das Lebensmittel keinen Fisch enthält. Es ist erfindungsgemäß möglich, dass das Lebensmittel ein Bindemittel oder ein Bindemittelsystem enthält, beispielsweise Mehl oder Eiweiß, um ein Herauslaufen des Lebensmittels aus der Ausnehmung insbesondere bei einer niedrigen Viskosität des Lebensmittels zu vermeiden.

Das erfindungsgemäße gefrorene Fischprodukt, welches insbesondere nach dem erfindungsgemäßen Verfahren herstellbar ist, enthält ein Fischfilet, mindestens zwei Fischfiletstücke die auf dem Fischfilet angeordnet sind, ein Lebensmittel, welches in einer Ausnehmung angeordnet ist, die einen polygonalen oder ovalen oder rundlichen Querschnitt aufweist und an mindestens zwei Seiten von den Fischfiletstücken begrenzt wird, und eine Panade und/oder Mehlierung, welche das Fischfilet, die Fischfiletstücke und das Lebensmittel umschließt. Die Ausnehmung weist vorzugsweise einen dreieckigen oder rechteckigen Querschnitt auf.

Insbesondere ist es bevorzugt, dass das gefrorene Fischprodukt aus 16 - 27 Gew.-% Fischfilet, 9 - 28 Gew.-% Fischfiletstücken, 5 - 25 Gew.-% Lebensmittel und 10 - 50 Gew.-% Panade und/oder Mehlierung besteht. Die Bestandteile ergeben hierbei insgesamt 100 Gew.-%. Das gefrorene Fischprodukt kann mühelos von einem Verbraucher in der Bratpfanne zubereitet werden.

Kurze Beschreibung der Zeichnungen
- Figur 1: zeigt eine Aufsicht auf ein Schollenfilet, auf welches in einer Ausführungsform des erfindungsgemäßen Verfahrens ein Werkzeug und zwei Schollenfiletstücke aufgebracht wurden.
- Figur 2: zeigt eine Seitenansicht des Schollenfilets aus Figur 1.

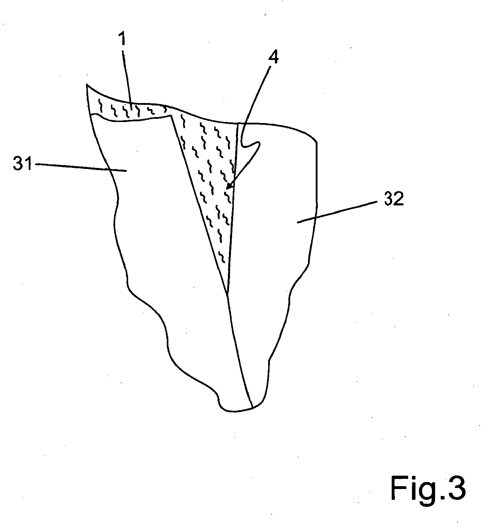

- Figur 3: zeigt das Schollenfilet aus Figur 1, von dem das Werkzeug entfernt wurde.
- Figur 4: zeigt das Schollenfilet aus Figur 3, auf welches in einem Verfahren gemäß einer Ausführungsform der Erfindung eine Soße aufgebracht wurde.
- Figur 5: zeigt eine Aufsicht auf ein paniert und/oder mehliertes Schollenprodukt gemäß einer Ausführungsform der Erfindung.
- Figur 6: zeigt einen Querschnitt des Schollenproduktes gemäß Figur 5.

### Ausführungsbeispiel der Erfindung

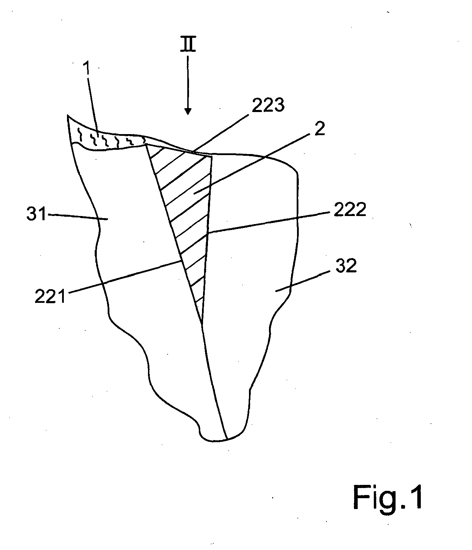

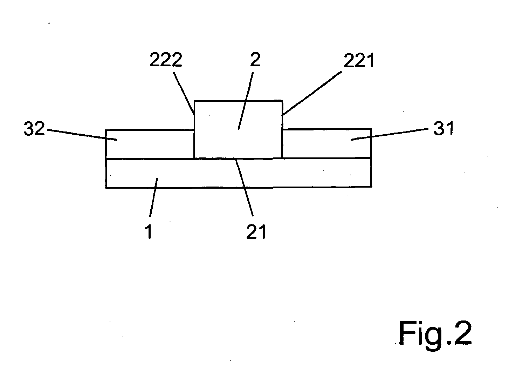

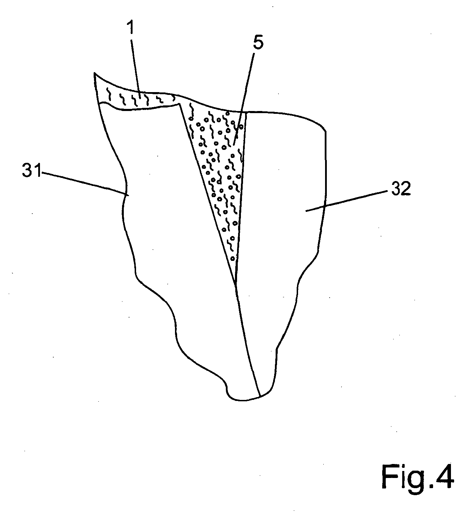

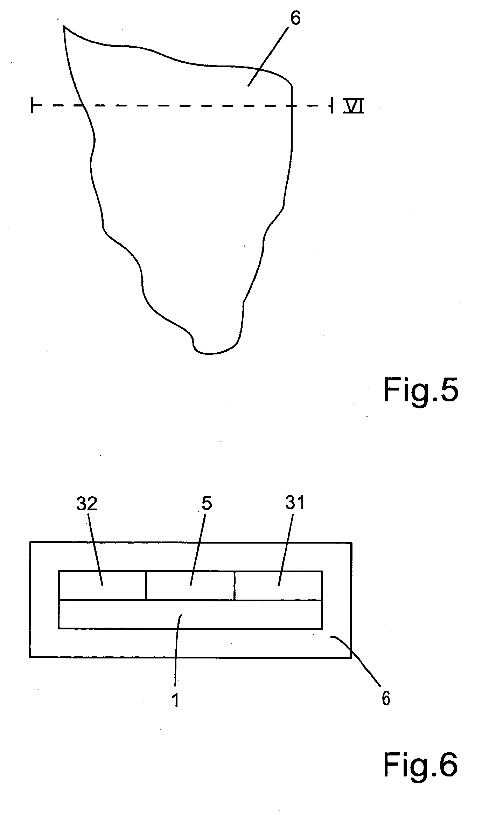

In einer Ausführungsform der Erfindung wird ein gefrorenes, entgrätetes und getrimmtes Schollenfilet 1 mit einem Gewicht von 47,5 g auf eine Temperatur von 2°C aufgetaut. In Figur 1 ist dargestellt, wie ein keilförmiges Werkzeug 2 auf dem Schollenfilet 1 angeordnet wird. Dieses Werkzeug 2 weist eine dreieckige Grundfläche 21 sowie drei Seitenflächen 221, 222, und 223 auf. Es besteht aus Polyethylen und kann durch Herausschneiden aus einer 1 cm dicken Polyethylenplatte erhalten werden. Es wird mit seiner Grundfläche 21 so auf dem Schollenfilet 1 angeordnet, dass seine kürzeste Seitenfläche 223 an einem Rand des Schollenfilets 1 zum Liegen kommt. Zwei Schollenfiletstücke 31, 32 mit einem Gewicht von jeweils 20 g werden so auf dem Schollenfilet 1 angeordnet, dass das erste Schollenfiletstück 31 an eine erste Seitenfläche 221 des Werkzeugs 2 angrenzt und das zweite Schollenfiletstück 32 an einer zweiten Seitenfläche 222 des Werkzeugs 2 angrenzt. Das Werkzeug 2 ist kürzer als die beiden Schollenfiletstücke 31, 32, sodass die beiden Schollenfiletstücke 31, 32 sich hinter dem Ende des Werkzeugs 2 berühren. Eine Seitenansicht der so erhaltenen Anordnung aus der in Figur 1 mit II bezeichneten Richtung ist in Figur 2 dargestellt. Das Schollenfilet 1, das Werkzeug 2 und die Schollenfiletstücke 31, 32 werden nun auf eine Temperatur von -20°C gekühlt. Anschließend wird das Werkzeug 2 entfernt. Dies ist leicht möglich, da es sowohl an seiner Oberseite als auch an seiner kürzesten Seitenfläche 223 nicht von dem Schollenfilet 1 oder den Schollenfiletstreifen 31, 32 begrenzt wird. Da das Schollenfilet 1 und die Schollenfiletstücke 31, 32 aneinander festgefroren sind, kommt es nach dem Entfernen des Werkzeugs 2 nicht zu einer Verschiebung der Schollenfiletstücke 31, 32, und an der zuvor von dem Werkzeug 2 eingenommenen Stelle bleibt eine Ausnehmung 4 zurück, welche vom Schollenfilet 1 und den beiden Schollenfiletstücken 31, 32 begrenzt wird. Als nächstes wird die Ausnehmung 4 mit 32,5 g einer hochviskosen Soße 5 befüllt. Dies ist in Figur 4 dargestellt. Anschließend werden das Schollenfilet 1, die Schollenfiletstücke 31, 32 und die Soße 5 mit 32,5 g einer Panade und/oder Mehlierung 6 ringsum paniert und/oder mehliert. Das so erhaltene Schollenprodukt ist in Figur 5 dargestellt. Ein Querschnitt durch das Schollenprodukt entlang der Linie VI in Figur 5 ist in Figur 6 dargestellt. Das Schollenprodukt wird schließlich auf eine Temperatur von -20°C gekühlt und verkaufsfertig verpackt. Wie dem Querschnitt in Figur 6 zu entnehmen ist, weist das Schollenprodukt eine ebene Ober- und Unterseite auf, sodass es gut in einer Bratpfanne zubereitet werden kann. Hierbei findet eine schnelle Erhärtung der Panade und/oder Mehlierung 6 statt, sodass ein Auslaufen der Soße 5 verhindert wird.

## Patentansprüche

1. Verfahren zur Herstellung eines gefrorenen Fischproduktes, aufweisend
- Bereitstellen eines Fischfilets (1),
- Anordnen einer Grundfläche (21) eines Werkzeugs (2) auf dem Fischfilet (1), wobei das Werkzeug (2) mindestens n Seitenflächen (221, 222, 223) aufweist und n mindestens 3 beträgt,
- Anordnen von mindestens zwei Fischfiletstücken (31, 32) auf dem Fischfilet (1), so dass die Fischfiletstücke (31, 32) mindestens an n - 1 Seitenflächen (221, 222) des Werkzeugs (2) angrenzen,
- Entfernen des Werkzeugs (2),
- Befüllen einer Ausnehmung (4), welche durch das Fischfilet (1) und die Fischfiletstücke (31, 32) begrenzt wird, mit einem Lebensmittel (5),
- Panieren und/oder Mehlieren des Fischfilets (1), der Fischfiletstücke (31, 32) und des Lebensmittels (5) mit einer Panade und/oder Mehlierung (6), und
- Kühlen des Fischfilets (1), der Fischfiletstücke (31, 32), des Lebensmittels (5) und der Panade und/oder Mehlierung (6) auf eine Temperatur von weniger als 0°C.

2. Verfahren nach Anspruch 1, **dadurch gekennzeichnet, dass** das Fischfilet (1) und die Fischfiletstücke (31, 32) von einem Plattfisch, insbesondere von einer Scholle, stammen.

3. Verfahren nach einem der Ansprüche 1 oder 2, **dadurch gekennzeichnet, dass** das Fischfilet (1), das Werkzeug (2) und die Fischfiletstücke (31, 32) vor dem Entfernen des Werkzeugs auf eine Temperatur von weniger als 0°C gekühlt werden.

4. Verfahren nach einem der Ansprüche 1 bis 3, **dadurch gekennzeichnet, dass** n einen Wert von 3 oder 4 hat.

5. Verfahren nach Anspruch 4, **dadurch gekennzeichnet, dass** zwei Fischfiletstücke (31, 32) so auf dem Fischfilet (1) angeordnet werden, dass die Fischfiletstücke (31, 32) an n - 1 Seitenflächen (221, 222) des Werkzeugs (2) angrenzen.

6. Gefrorenes Fischprodukt, enthaltend ein Fischfilet (1), mindestens zwei Fischfiletstücke (31, 32), die auf dem Fischfilet (1) angeordnet sind, ein Lebensmittel (5), welches in einer Ausnehmung (4) angeordnet ist, die einen polygonalen oder ovalen oder rundlichen Querschnitt aufweist und an mindestens zwei Seiten von den Fischfiletstücken (31, 32) begrenzt wird und eine Panade und/oder Mehlierung (6), welche das Fischfilet (1), die Fischfiletstücke (31, 32) und das Lebensmittel (5) umschließt.

7. Gefrorenes Fischprodukt nach Anspruch 6, **dadurch gekennzeichnet, dass** das Fischfilet (1) und die Fischfiletstücke (31, 32) von einem Plattfisch, insbesondere von einer Scholle, stammen.

8. Gefrorenes Fischprodukt nach Anspruch 6 oder 7, **dadurch gekennzeichnet, dass** es aus 16 - 57 Gew.-% Fischfilet, 9 - 28 Gew.-% Fischfiletstücken, 5 - 25 Gew.-% Lebensmittel und 10 - 50 Gew.-% Mehlierung und/oder Panade besteht, wobei die Bestandteile insgesamt 100 Gew.-% ergeben.

9. Gefrorenes Fischprodukt nach einem der Ansprüche 6 bis 8, **dadurch gekennzeichnet, dass** die Ausnehmung (4) einen dreieckigen oder rechteckigen Querschnitt aufweist.

10. Gefrorenes Fischprodukt nach einem der Ansprüche 6 bis 9, **dadurch gekennzeichnet, dass** es gemäß einem Verfahren nach einem der Ansprüche 1 bis 5 herstellbar ist.

## Claims

1. A method for producing a frozen fish product, comprising
- providing a fish fillet (1);
- placing a base area (21) of a tool (2) on the fish fillet (1), wherein the tool (2) has at least n side surfaces (221, 222, 223) and n is at least 3;
- placing at least two fish fillet pieces (31, 32) on the fish fillet (1), so that the fish fillet pieces (31, 32) are bounded by at least n-1 side surfaces (221, 222) of the tool (2);
- removal of the tool (2);
- filling of a recess (4), which is bounded by the fish fillet (1) and the fish fillet pieces (31, 32), by a foodstuff (5);
- breading and/or flour coating of the fish fillet (1), the fish fillet pieces (31, 32) and the foodstuff (5) with a breadcrumb coating and/or flour coating, and
- refrigerating of the fish fillet (1), the fish fillet pieces (31, 32), the foodstuff (5) and the breadcrumb coating and/or flour coating (6) to a temperature of less than 0°C.

2. A method according to claim 1, **characterized in that** the fish fillet (1) and the fish fillet pieces (31, 32) originate from a flatfish, especially plaice.

3. A method according to one of the claims 1 or 2, **characterized in that** the fish fillet (1), the tool (2) and the fish fillet pieces (31, 32) are refrigerated to a temperature of less than 0°C prior to the removal of the tool.

4. A method according to one of the claims 1 to 3, **characterized in that** n has a value of 3 or 4.

5. A method according to claim 4, **characterized in that** two fish fillet pieces (31, 32) are arranged on the fish fillet (1) in such a way that the fish fillet pieces (31, 32) are bounded by n-1 side surfaces (221, 222) of the tool (2).

6. A frozen fish product, containing a fish fillet (1), at least two fish fillet pieces (31, 32) which are arranged on the fish fillet (1), a foodstuff (5) which is arranged in a recess (4) having a polygonal or oval or round cross-section and is bounded on at least two sides by the fish fillet pieces (31, 32), and a breadcrumb coating and/or flour coating (6) which surrounds the fish fillet (1), the fish fillet pieces (31, 32) and the foodstuff (5).

7. A frozen fish product according to claim 6, **characterized in that** the fish fillet (1) and the fish fillet pieces (31, 32) originate from a flatfish, especially a plaice.

8. A frozen fish product according to claim 6 or 7, **characterized in that** it consists of 16 to 57% by weight of fish fillet, 9 to 28% by weight of fish fillet pieces, 5 to 25% by weight of foodstuff, and 10 to 50% by weight of flour coating and/or breadcrumb coating, wherein the components add up to 100% in total.

9. A frozen fish product according to one of the claims 6 to 8, **characterized in that** the recess (4) has a triangular or rectangular cross-section.

10. A frozen fish product according to one of the claims 6 to 9, **characterized in that** it can be produced according to a method according to one of the claims 1 to 5.

## Revendications

1. Procédé de préparation d'un produit à base de poisson congelé comprenant les étapes consistant à :
- préparer un filet de poisson (1),
- positionner en place une surface de base (21) d'un outil (2) sur le filet de poisson (1), l'outil (2) comportant au moins n faces latérales (221, 222, 223) et n étant au moins égal à 3,
- positionner au moins deux morceaux de filet de poisson (31, 32) sur le filet de poisson (1) de sorte que les morceaux de filet de poisson (31, 32) soient contigus à au moins n - 1 faces latérales (221, 222) de l'outil (2),
- enlever l'outil (2),
- remplir un évidement (4) qui est limité par le filet de poisson (1) et les morceaux de filet de poisson (31, 32) avec une denrée alimentaire (5),
- paner et/ou enfariner le filet de poisson (1), les morceaux de filet de poisson (31, 32) et la denrée alimentaire (5) avec une panure et/ou une farine (6), et
- refroidir le filet de poisson (1), les morceaux de filet de poisson (31, 32), la denrée alimentaire (5) et la panure et/ou la farine (6) à une température inférieure à 0°C.

2. Procédé conforme à la revendication 1,
**caractérisé en ce que**
le filet de poisson (1) et les morceaux de poisson (31, 32) proviennent d'un poisson plat, en particulier d'un carrelet.

3. Procédé conforme à l'une des revendications 1 et 2,
**caractérisé en ce que**
le filet de poisson (1), l'outil (2) et les morceaux de filet de poisson (31, 32) sont refroidis à une température inférieure à 0°C avant d'enlever l'outil.

4. Procédé conforme à l'une des revendications 1 à 3,
**caractérisé en ce que**
n est égal à 3 ou 4.

5. Procédé conforme à la revendication 4,
**caractérisé en ce que**
deux morceaux de filet de poisson (31, 32) sont positionnés sur le filet de poisson (1) de sorte que les morceaux de filet de poisson (31, 32) soient contigus à n - 1 faces latérales (221, 222) de l'outil (2).

6. Produit à base de poisson congelé renfermant un filet de poisson (1), au moins deux morceaux de filet de poisson (31, 32) qui sont positionnés sur le filet de poisson (1), une denrée alimentaire (5) qui est positionnée dans un évidement (4) qui présente une section polygonale, ovale ou arrondie, et est limité par au moins deux faces des morceaux de filet de poisson (31, 32), et une panure et/ou une farine (6) qui entoure le filet de poisson (1), les morceaux de filet de poisson (31, 32) et la denrée alimentaire (5).

7. Produit à base de poisson congelé conforme à la revendication 6,
**caractérisé en ce que**
le filet de poisson (1) et les morceaux de filet de poisson (31, 32) provienne d'un poisson plat, en particulier d'un carrelet.

8. Produit à base de poisson congelé conforme à la revendication 6 ou 7,
**caractérisé en ce qu'**
il est constitué de 16 - 57 % en poids de filet de poisson, de 9 - 28 % en poids de morceaux de filet de poisson, de 5 - 25 % en poids de denrée alimentaire et de 10- 50 % en poids de panure et/ou de farine, ces proportions se complétant à 100 % en poids.

9. Produit à base de poisson congelé conforme à l'une des revendications 6 à 8,
**caractérisé en ce que**
l'évidement (4) a une section triangulaire ou rectangulaire.

10. Produit à base de poisson congelé conforme à l'une des revendications 6 à 9,
**caractérisé en ce qu'**
il est susceptible d'être obtenu conformément à la mise en oeuvre du procédé selon l'une quelconque des revendications 1 à 5.
